# EUROPEAN PATENT SPECIFICATION

(11) **EP 0 442 678 B1**
(45) Date of publication and mention of the grant of the patent: **06.09.1995**
(21) Application number: 91301068.2
(22) Date of filing: 11.02.1991
(51) Int. Cl.: B60C 9/20, B60C 11/04

(54) **Pneumatic tyre**
Luftreifen
Bandage pneumatique

(30) Priority: 15.02.1990 JP 13911/90 U; 19.02.1990 JP 15468/90 U
(43) Date of publication of application: 21.08.1991
(73) Proprietor: SUMITOMO RUBBER INDUSTRIES LIMITED, Kobe-shi Hyogo-ken (JP)
(72) Inventor: Iseki, Tsutomu, Nishishirakawa-gun, Fukishima-ken (JP)
(74) Representative: Stewart, Charles Geoffrey

(56) References cited:
- EP-A- 0 196 161
- EP-A- 0 313 362
- EP-A- 0 414 470
- FR-A- 2 138 542
- FR-A- 2 398 625
- LU-A- 44 250

## Description

The present invention relates to a pneumatic tyre and particularly a tyre having a belt reinforcement disposed radially outside the carcass to reinforce the tread portion of the tyre and a band layer disposed radially outside the belt reinforcement to adjust the characteristics of the tyre.

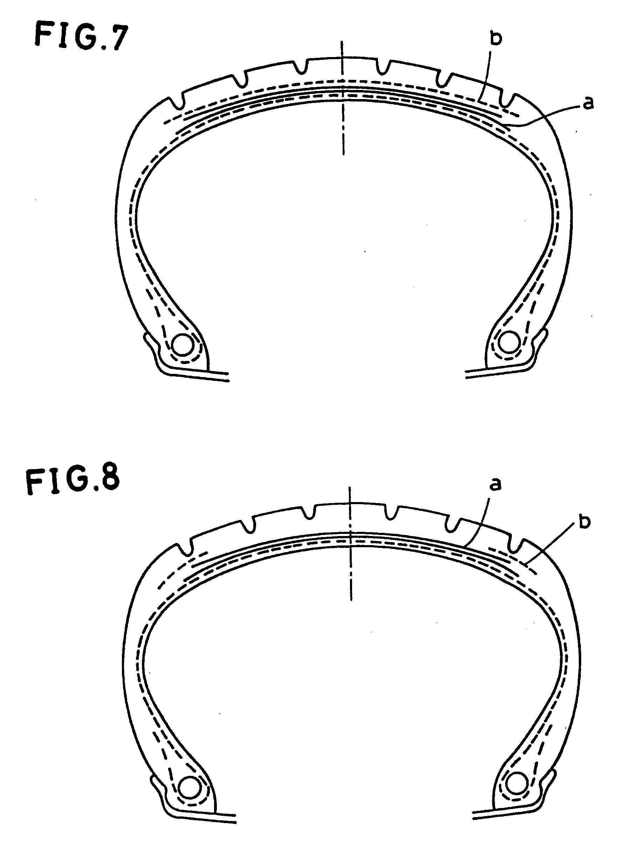

Such a belt, for example as shown in Figs. 7 and 8, includes a breaker layer (a) disposed on the radially outside of the carcass and a band layer (b) disposed radially outside the breaker layer. The breaker layer is composed of at least one ply of parallel cords, which extends across the whole width of the tread with the cords inclined with respect to the tyre equator. The main purpose of the breaker layer is to increase the rigidity of the tread portion.

The band layer is also composed of at least one ply of parallel cords laid substantially parallel or at least a relatively small angle to the tyre equator. The main purpose of the band layer is to provide a hoop affect for the tread portion.

Examples of known band layers include the following:-
one extending over the substantially whole width of a breaker layer or the tread width as shown in Fig. 7,
one composed of a pair of axially spaced plies disposed at the axial edge portions of the breaker layer as shown in Fig. 8 to prevent separation of the breaker edge from the surrounding rubber, and
one having edge portions folded to wrap the breaker edges therein to prevent separation of the breaker edges.

Additionally in order to improve various characteristics of the tyre, such as road grip drainage or running stability, tyres are provided with grooves to form rib type patterns, block type tread patterns and the like. The tread elements, such as rubs or blocks, may be provided with sipes.

In conventional pneumatic tyres, the above mentioned band layers are disposed symmetrically with respect to the tyre equator, regardless of the positions of the tread grooves and sipes, in order to reinforce the tread portion of the tyre.

However, lateral grooves and sipes extending across a rib, partially decrease the rigidity of the tread, and as a result the tread element, the rib, or divided rib moves more easily, which is apt to cause uneven wear.

Furthermore when the lateral grooves and/or sipes are inclined at a bias angle to the tyre axial direction, for example to reduce tyre noise, and when the tread pattern is of an asymmetrical pattern such that all of the lateral grooves are laid in the same direction, for example to improve the drainage performance of the tyre, the rigidity of the tread elements and tread pattern varies according to direction of measurement and a difference in dynamic performance, e.g. cornering force is generating between the turning directions of the vehicle left turn and right turn, and sometime, the shape of the ground contacting region and the ground pressure distribution is disturbed.

A known tyre disclosing the features of the preamble of claim 1 is shown, e.g. by FR-A-2 138 542.

Incidentally, even if the tread pattern is symmetrical, such a difference in dynamic tyre performance may be generated by a ply steer phenomenon in the cords of the radially outermost belt ply.

It is therefore an object of the present invention to provide a pneumatic tyre, in which defects arising from the tread pattern, e.g. uneven wear, are avoided.

It is a second object of the present invention to provide a pneumatic tyre, in which tyre characteristics depending upon the tread pattern, tyre construction, tyre profile and the like are improved.

Accordingly the invention provides a pneumatic tyre comprising a tread portion, said tread portion having a pair of tread edges, a pair of axially spaced bead portions, a pair of sidewall portions, one of said pair of sidewall portions extending between one of said pair of tread edges and one of said pair of bead portions, a pair of bead cores, one of said pair of bead cores being disposed in each said bead portion, a carcass extending between said bead portions and turned up around each of said pair of bead cores, a belt reinforcement layer disposed radially outside said carcass in said tread portion and including at least one ply of parallel cords which ply extends between said tread edges to reinforce a substantially full width of the tread portion, and a narrow cord layer of cords disposed radially outside said belt reinforcement layer and having a width narrower than that of said belt reinforcement layer, said tread portion provided with a plurality of circumferential grooves extending circumferentially of the tyre in parallel with the tyre equator, each of said plurality of circumferential grooves having an axially inner sidewall and an axially outer sidewall, and dividing said tread portion into a plurality of ribs, characterised in that said narrow cord layer is disposed beneath at least one of said plurality of ribs, said narrow cord layer is disposed asymmetrically, in the axial direction of the tyre, with respect to the tyre equator, said at least one of said plurality of ribs is provided with a plurality of lateral grooves extending across the entire width of said at least one rib to divide said at least one rib into a plurality of blocks, said lateral grooves being substantially straight, and the cords in said narrow cord layer are laid at an angle of more than 45 degrees to the direction of the lateral grooves.

Embodiments of the present invention will now be described in detail with reference to the accompanying drawings, in which:-
Fig.1 is a sectional view showing a first embodiment of the present invention;
Fig.2 is a partial plan view showing the tread pattern thereof;
Fig.3 is a sectional view showing a second embodiment;
Fig.4 is a partial plan view showing the tread patterns thereof;
Fig.5 is a sectional view showing a third embodiment;
Fig.6 is a partial plan view showing the tread pattern thereof; and
Figs.7 and 8 are sectional views showing conventional prior art belt structures.

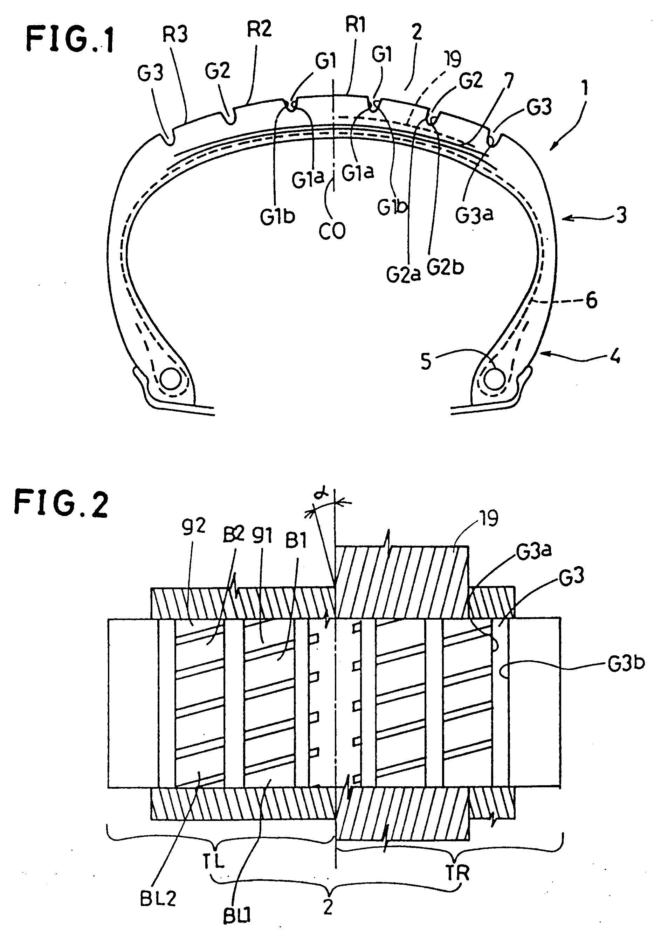

In Figs. 1-6 a pneumatic tyre 1 of the present invention has a pair of axially spaced bead portions 4, a tread portion 2, and a pair of sidewalls 3 extending between the tread edges and bead portions, a pair of bead cores 5 disposed one in each of the bead portions, and a carcass 6 extending between the bead portions and is turned up around the bead cores. A belt layer 7 is disposed radially outside the carcass in the tread portion 2.

The carcass 6 comprises at least one ply of radially arranged cords. The cords may be inorganic cords e.g. steel cords, or organic fibre cords e.g. polyester, aromatic polyamide, nylon or the like.

The belt layer 7 comprises at least one ply of parallel cords to reinforce the tread portion of the tyre and also to provide a hoop effect.

For the belt cords, inorganic cords e.g. steel cords, or organic fibre cords e.g. polyester, aromatic polyamide, nylon or the like may be used.

In each embodiment, the belt layer 7 comprises two plies, a radially inner ply and a radially outer ply. The cords in each ply are laid at a small angle with respect to the tyre equator so as to cross the cords of the radially adjacent ply.

The tread portion 2 is provided with a plurality of circumferential grooves extending circumferentially of the tyre. In each of the embodiments shown in the Figures, six circumferential grooves G1, G2 and G3 (from the tyre equator CO to each tread edge) are formed in the tread to define one central rib R1 between the circumferential grooves G1 and G1, tow middle ribs R2 between the circumferential grooves G1 and G2, and two side ribs R3 between the circumferential grooves G2 and G3.

The circumferential grooves G1-G3 in each embodiment have a straight configuration but they may be formed in a different configuration, e.g. a zigzag configuration, or a wavy configuration or the like.

In the Figures, references: G1a, G2a and G3a indicate the axially inner sidewalls of the circumferential grooves G1, G2 and G3 respectively, and references G1b, G2b, G3b indicate the axially outer sidewalls of the circumferential grooves G1, G2 and G3 respectively.

Figs. 1-6 show embodiments according to the present invention in which one or more cord layers 19 are disposed asymmetrically with respect to the tyre equator.

In Figs. 1 and 2, the ribs R2 and R3 are provided with lateral grooves g1 and g2.

The lateral grooves g1 and g2 are circumferentially spaced apart from each other, and extend across the whole width of the respective ribs R2 and R3 at an inclination angle with respect to the tyre equator CO so as to divide each rib into blocks, whereby a row BL1 of blocks B1 is formed between the circumferential grooves G1 and G2, and a row BL2 of blocks B2 is formed between the circumferential grooves G2 and G3.

As shown in Fig. 2 all of the lateral grooves g1 and g2 in this embodiment have a right side upward inclination, therefore the tyre has an asymmetrical tread pattern with respect to the tyre equator CO and the cords of the radially outer ply of the belt 7 are arranged at an inclination angle of 3 to 30 degrees to the tyre equator CO to have a left side upward inclination.

The tread portion 2 is provided with a cord layer 19 on one side, the right side TR of the tyre equator CO, but not on the other left side TL.

The cord layer 19 is disposed in the tread portion asymmetrically with respect to the tyre equator, and the layer extends from the tyre equator CO to a position near the above mentioned axially inner groove sidewall G3a, thereby increasing the thickness of the tread reinforcement and stiffness of the right side part TR of the tread portion 2. As a result, the dynamic loaded tyre diameter is increased in the right side part TR of the left side part TL of the tread according to the construction thereof or the cord material, which generates conicity in the tyre.

When extensible cords are used for the cord layer 19 the dynamic loaded tyre diameter will be increased in the right side part TR. However, when pull resistant i.e. extensible cords e.g. steel or aromatic polyamide cords are used for the cord layer 19 the dynamic loaded tyre diameter will be increased in the left side part TL.

The reinforcing cords are inclined dependent upon the required use of the tyre for example at an angle of 0 to 60 degrees with respect to the tyre equator.

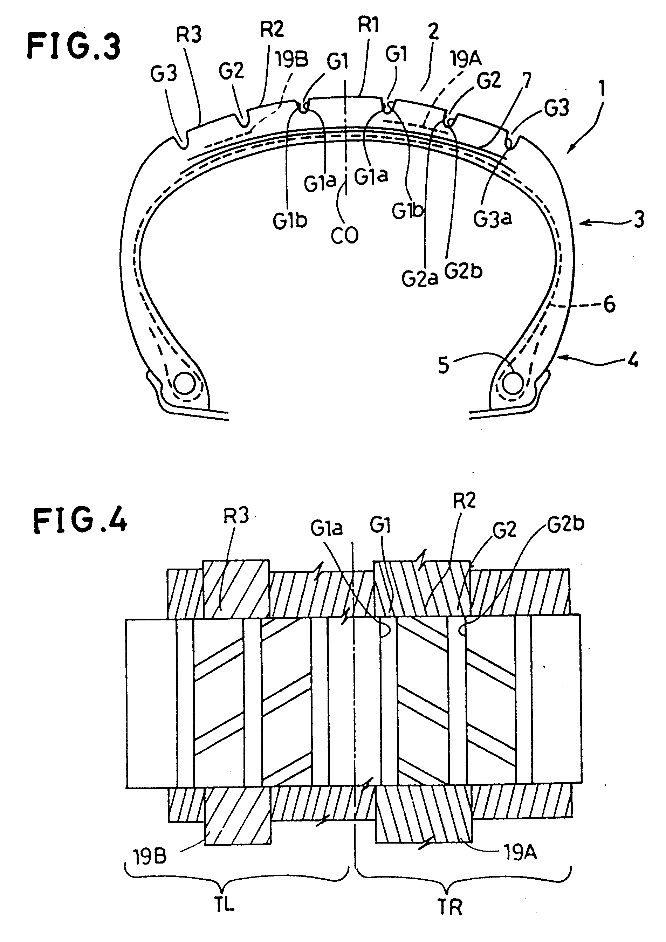

In Figs. 3 and 4 the tread portion 2 is provided with lateral grooves which are symmetrical with respect to the tyre equator CO so that the tyre 1 has a symmetrical pattern with respect to the tyre equator.

In the right side tread part TR, there is disposed a cord layer 19A centred on the central rib R2, and the edges thereof are extended over the axially inner sidewall G1a of the circumferential groove G1 and the axially outer sidewall G2b of the circumferential groove G2, respectively.

In the left side trade part TL, there is disposed a cord layer 19B extending between a position beneath the middle rib R2 and a position beneath the side rib R3 across the groove G2.

The cord inclination of the cord layer 19A differs from that of the cord layer such that the cord layer 19A has a left side upward inclination, and the cord layer 19B has a right side upward inclination.

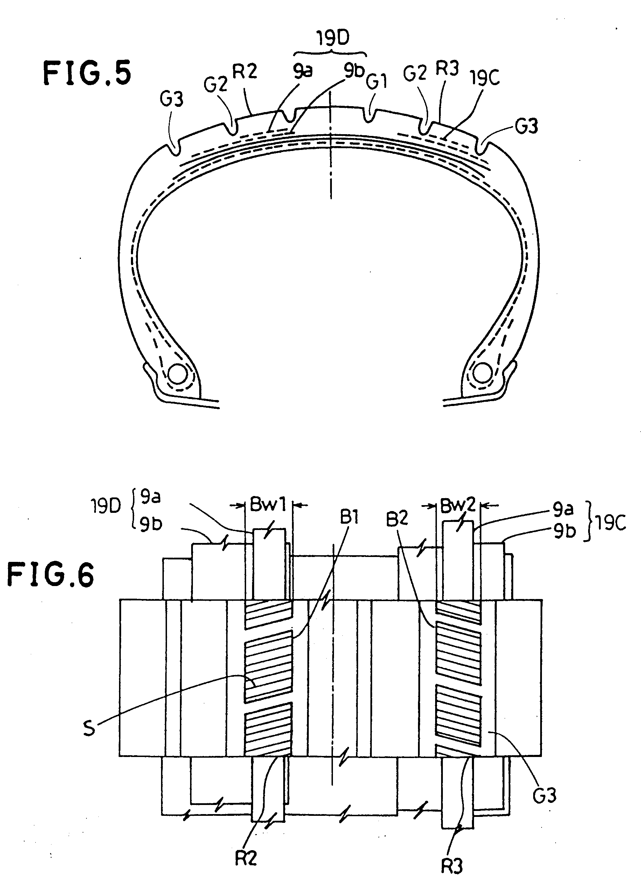

In Figs. 5 and 6, the middle rib R2 on the left side is provided with straight lateral grooves to be divided into blocks B2, whereby the tyre 1 has an asymmetrical tread pattern.

Each of the blocks B1 and B2 is provided with straight sipes S inclined in the same direction as the lateral grooves.

Beneath the divided ribs R2 and R3, two cord layers 19D and 19C respectively are disposed.

Each cord layer 19C and 19D comprises a narrow ply 9a and a wide ply 9b disposed radially inside the narrow ply 9a.

The axial width of the radially outer ply 9a of the cord layer 19C is narrower than the axial width Bw2 of the blocks B2. The axial width of the radially outer ply 9a of the cord layer 19D is also narrower than the axial width Bw1 of the blocks B1.

The radially outer plies 9a are centred on the respective ribs in the tyre axial direction to increase the rigidity of the blocks B1 and B2.

The radially inner plies 9b are disposed asymmetrically with respect to the tyre equator such that the ply 9b of the cord layer 19C extends between a position axially outward of the groove G3 and a position axially inward of the groove G2, and the ply 9b of the cord layer 19D extends between a position beneath the groove G1 and a position axially outward of the groove G2.

In the case where the camber angle for the tyre is set at zero or a very small value, instead of setting it at a larger value to generate a camber thrust or a camber torque, it is preferably to generate a conicity force (COF) and a conicity torque (COT) with the purpose of obtaining the required camber thrust and camber torque.

By disposing the cord layer asymmetrically of the tyre equator CO a difference in rigidity and tread thickness are produced which provide conicity in the tyre, and thereby generate a conicity force (COF) and a conicity torque (COT) which can prevent imbalance in handling of the vehicle and can compensate for two defect of ply steer due to the outermost belt ply.

When the tyres are provided with conicity as described above, they are installed on the vehicle such that the larger diameter side of each tyre is located outwardly of the vehicle or inwardly of the vehicle, that is, symmetrically with respect to the centre line of the vehicle to ensure that the COF and COT of the tyre on one side and those on the other side of the vehicle cancel out each other.

When the cord layer is disposed on only one side of the tyre equator as shown in Figs. 1-2, this side is preferably located outwardly of the vehicle so that the outward side of the tyre which is subjected to a larger deformation than the inward side of the tyre during cornering is reinforced, and the ground contacting area is increased, with the result that cornering performance is improved. In the tyre having an asymmetrical tread pattern, the cord layer can be positioned to decrease the difference in cornering force between right and left turns and thereby to improve cornering performance and directional stability.

As described above, according to the present invention, the cord layer is disposed asymmetrically with respect to the tyre equator. Therefore, a difference in rigidity and/or thickness of the tread portion is made between the right side and left side of the tyre equator, and the dynamic performance of the tyre can be improved.

Additionally asymmetrical reinforcement to the tread portion can be made by changing the cord thickness, cord direction, cord angle and cord count between the right side and left side of the tyre equator.

## Claims

1. A pneumatic tyre (1) comprising a tread portion (2), said tread portion (2) having a pair of tread edges, a pair of axially spaced bead portions (4), a pair of sidewall portions (3), one of said pair of sidewall portions (3) extending between one of said pair of tread edges and one of said pair of bead portions (4), a pair of bead cores (5), one of said pair of bead cores (5) being disposed in each said bead portion (4), a carcass (6) extending between said bead portions (4) and turned up around each of said pair of bead cores (5), a belt reinforcement layer (7) disposed radially outside said carcass (6) in said tread portion (2) and including at least one ply of parallel cords which ply extends between said tread edges to reinforce a substantially full width of the tread portion (2), and a narrow cord layer (19,19A,19B,19C,19D) of cords disposed radially outside said belt reinforcement layer (7) and having a width narrower than that of said belt reinforcement layer (7), said tread portion (2) provided with a plurality of circumferential grooves (G1,G2,G3) extending circumferentially of the tyre in parallel with the tyre equator, each of said plurality of circumferential grooves (G1,G2,G3) having an axially inner sidewall (G1a,G2a,G3a) and an axially outer sidewall (G1b,G2b,G3b), and dividing said tread portion (2) into a plurality of ribs (R1,R2,R3), characterised in that said narrow cord layer (19,19A,19B,19C,19D) is disposed beneath at least one of said plurality of ribs (R1,R2,R3), said narrow cord layer (19,19A,19B,19C,19D) is disposed asymmetrically, in the axial direction of the tyre, with respect to the tyre equator, said at least one of said plurality of ribs (R1,R2,R3) is provided with a plurality of lateral grooves (g1,g2,g3) extending across the entire width of said at least one rib to divide said at least one rib into a plurality of blocks, said lateral grooves (g1,g2,g3) being substantially straight, and the cords in said narrow cord layer (19,19A,19B,19C,19D) are laid at an angle of more than 45 degrees to the direction of the lateral grooves (g1,g2,g3).

2. A pneumatic tyre according to claim 1, characterised in that said lateral grooves (g1,g2,g3) extend parallel to each other in said at least one rib.

3. A pneumatic tyre according to claim 1, characterised in that the cords in said narrow cord layer (19,19A,19B,19C,19D) are laid at substantially right angles to the direction of said lateral grooves (g1,g2,g3).

4. A pneumatic tyre according to claim 1, characterised in that said narrow cord layer (19,19A,19B,19C,19D) is disposed beneath each of two of the ribs (R1,R2,R3) which are located asymmetrically with respect to the tyre equator so that the cord layers are disposed asymmetrically in the axial positions with respect to the tyre equator.

5. A pneumatic tyre according to claim 1, characterised in that the narrow cord layer (19,19A,19B,19C,19D) is disposed on only one side of the tyre equator to provide an asymmetrical reinforcement, with respect to the tyre equator, for the tread portion (2).

6. A pneumatic tyre according to claim 5, characterised in that said narrow cord layer (19,19A,19B,19C,19D) extends from the tyre equator towards one of the tread edges.

7. A pneumatic tyre according to claim 4, characterised in that the narrow cord layers (19,19A,19B,19C,19D) have different widths.

8. A pneumatic tyre according to claim 4, characterised in that said narrow cord layers (19,19A,19B,19C,19D) have different cord inclinations.

9. A pneumatic tyre according to claim 1, characterised in that said narrow cord layer (19,19A,19B,19C,19D) is composed of two plies having different widths.

10. A pneumatic tyre according to claim 1, characterised in that said circumferential grooves (G1,G2,G3) and said lateral grooves (g3) form a tread pattern which is symmetrical with respect to the tyre equator.

11. A pneumatic tyre according to claim 1, characterised in that said circumferential grooves (G1,G2,G3) and said lateral grooves (g3) form a tread pattern which is asymmetrical with respect to the tyre equator.

12. A pneumatic tyre according to either of claims 1 or 2, characterised in that said narrow cord layer (19,19A,19B,19C,19D) has an axial width narrower than the axial width of said at least one of said plurality of ribs (R1,R2,R3) as measured at the tread surface so that the edges thereof are not extended to underlie said axially inner sidewall (G1a,G2a,G3a) and axially outer sidewall (G1b,G2b,G3b) defining said at least one rib.

13. A pneumatic tyre according to any of claims 1, 2, 3 or 11, characterised in that said narrow cord layer (19,19A,19B,19C,19D) has an axial width wider than the axial width of said at least one of said plurality of ribs (R1,R2,R3) as measured at the tread surface so that one of the edges thereof is not extended to underlie one of said first and second sidewalls defining said at least one rub, but the other edge thereof is extended to underlie the other one of said first and second sidewalls.

14. A pneumatic tyre according to any of claims 1, 3, or 11, characterised in that said narrow cord layer (19C,19D) comprises a narrow ply (a) of cords having an axial width narrower than the axial width of said at least one of said plurality of ribs (R1,R2,R3) measured at the tread surface so that the edges thereof are not extended to underlie said first and second sidewalls defining said at least one rib, and further comprises a wide ply (9b) of cords, having a width wider than that of said narrow ply (9a) but narrower than that of said belt reinforcement layer (7), is disposed radially between said narrow ply (9a) and said belt reinforcement layer (7), said wide ply (9b) is disposed asymmetrically, in the axial direction of the tyre, with respect to the tyre equator and said wide ply (9b) has an axial width wider than the axial width of said at least one of said plurality of ribs (R1,R2,R3) as measured at the tread surface so that at least one of the edges thereof is extended to underlie one of said first and second sidewalls defining said at least one rib.

15. A pneumatic tyre according to claim 3 or 11, characterised in that said narrow cord layer (19,19A,19B,19C,19D) has an axial width narrower than the axial width of said at least one of said plurality of ribs (R1,R2,R3) as measured at the tread surface so that the edges thereof are not extended to underlie said first and second sidewalls defining said at least one rib.

## Patentansprüche

1. Ein Luftreifen (1) mit einem Laufflächenbereich (2), wobei der Laufflächenbereich (2) ein Paar von Laufflächenkanten hat, einem Paar von axial beabstandeten Wulstbereichen (4), einem Paar von Seitenwandbereichen (3), wobei sich ein Seitenwandbereich (3) des Paares von Seitenwandbereichen (3) zwischen einer Laufflächenkante des Paares von Laufflächenkanten und einem Wulstbereich (4) des Paares von Wulstbereichen (4) erstreckt, einem Paar von Wulstkernen (5), von denen einer jeweils in jedem Wulstbereich (4) angeordnet ist, einer Karkasse (6), die sich zwischen den Wulstbereichen (4) erstreckt und nach oben um jeden Wulstkern (5) des Paares von Wulstkernen (5) umgeschlagen ist, einer Gürtelverstärkungsschicht (7), die radial außerhalb von der Karkasse (6) in dem Laufflächenbereich (2) angeordnet ist und wenigstens eine Lage von parallelen Korden umfaßt, die sich zwischen den Laufflächenkanten erstreckt, um eine im wesentlichen volle Breite des Laufflächenbereiches (2) zu verstärken, und einer schmalen Kordschicht (19,19A, 19B,19C,19D) aus Korden, die radial außerhalb der Gürtelverstärkungsschicht (7) gelegt ist und eine Breite hat, die schmaler als die der Gürtelverstärkungsschicht (7) ist, wobei der Laufflächenbereich (2) mit einer Mehrzahl von Umfangsrillen (G1,G2,G3) versehen ist, die sich in Umfangsrichtung des Reifens parallel zu dem Reifenäquator erstrecken, wobei jede der Mehrzahl von Umfangsrillen (G1,G2,G3) eine axial innere Seitenwandung (G1a,G2a,G3a) und eine axial äußere Seitenwandung (G1b,G2b,G3b) hat und den Laufflächenbereich (2) in eine Mehrzahl von Rippen (R1,R2,R3) unterteilt, dadurch gekennzeichnet, daß die schmale Kordschicht (19,19A,19B,19C,19D) unterhalb wenigstens einer der Mehrzahl von Rippen (R1,R2,R3) angeordnet ist, daß die schmale Kordschicht (19,19A,19B,19C,19D) asymmetrisch in der Axialrichtung des Reifens bezüglich des Reifenäquators angeordnet ist, daß wenigstens eine der Mehrzahl von Rippen (R1,R2,R3) mit einer Mehrzahl von sich in seitlicher Richtung erstreckenden Rillen (g1,g2,g3) versehen ist, die sich über die volle Breite der wenigstens einen Rippe erstrecken, um die wenigstens eine Rippe in eine Mehrzahl von Blöcken zu unterteilen, wobei die sich seitlich erstreckenden Rillen (g1,g2,g3) im wesentlichen geradlinig sind, und daß die Korde in der schmalen Kordschicht (19,19A,19B,19C,19D) unter einem Winkel von mehr als 45 Grad zu der Richtung der sich in seitlicher Richtung erstreckenden Rillen (g1,g2,g3) gelegt sind.

2. Ein Luftreifen nach Anspruch 1,
dadurch gekennzeichnet,
daß die in seitlicher Richtung verlaufenden Rillen (g1,g2,g3) sich parallel zueinander in der wenigstens einen Rippe erstrecken.

3. Ein Luftreifen nach Anspruch 1,
dadurch gekennzeichnet,
daß die Korde in der schmalen Kordschicht (19,19A,19B,19C,19D) im wesentlichen rechtwinklig zu der Richtung der in seitlicher Richtung verlaufenden Rillen (g1,g2,g3) gelegt sind.

4. Ein Luftreifen nach Anspruch 1,
dadurch gekennzeichnet,
daß die schmale Kordschicht (19,19A,19B,19C,19D) unterhalb jeder von zweien der Rippen (R1,R2,R3) angeordnet ist, die asymmetrisch bezüglich des Reifenäquators plaziert sind, so daß die Kordschichten asymmetrisch in den axialen Positionen bezüglich des Reifenäquators angeordnet sind.

5. Ein Luftreifen nach Anspruch 1,
dadurch gekennzeichnet,
daß die schmale Kordschicht (19,19A,19B,19C,19D) nur an einer Seite des Reifenäquators angeordnet ist, um eine asymmetrische Verstärkung bezüglich des Reifenäquators für den Laufflächenbereich (2) zu bilden.

6. Ein Luftreifen nach Anspruch 5,
dadurch gekennzeichnet,
daß die schmale Kordschicht (19,19A,19B,19C,19D) sich von dem Reifenäquator in Richtung von einer der Laufflächenkanten erstreckt.

7. Ein Luftreifen nach Anspruch 4,
dadurch gekennzeichnet,
daß die schmalen Kordschichten (19,19A,19B,19C,19D) unterschiedliche Breiten haben.

8. Ein Luftreifen nach Anspruch 4,
dadurch gekennzeichnet,
daß die schmalen Kordschichten (19,19A,19B,19C,19D) unterschiedliche Kordneigungen haben.

9. Ein Luftreifen nach Anspruch 1,
dadurch gekennzeichnet,
daß die schmale Kordschicht (19,19A,19B,19C,19D) aus zwei Lagen mit unterschiedlichen Breiten besteht.

10. Ein Luftreifen nach Anspruch 1,
dadurch gekennzeichnet,
daß die Umfangsrillen (G1,G2,G3) und die seitlich verlaufenden Rillen (g3) ein Laufflächenprofil bilden, das symmetrisch bezüglich des Reifenäquators ist.

11. Ein Luftreifen nach Anspruch 1,
dadurch gekennzeichnet,
daß die Umfangsrillen (G1,G2,G3) und die seitlich verlaufenden Rillen (g3) ein Laufflächenprofil bilden, das asymmetrisch bezüglich des Reifenäquators ist.

12. Ein Luftreifen nach Anspruch 1 oder 2,
dadurch gekennzeichnet,
daß die schmale Kordschicht (19,19A,19B,19C,19D) eine axiale Breite hat, die schmaler als die axiale Breite der wenigstens einen der Mehrzahl von Rippen (R1,R2,R3) gemessen an der Laufflächenoberfläche ist, so daß die Kanten von ihr sich nicht bis unter die axial innere Seitenwandung (G1a,G2a,G3a) und die axial äußere Seitenwandung (G1b,G2b,G3b) erstrecken, welche die wenigstens eine Rippe definieren.

13. Ein Luftreifen nach einem der Ansprüche 1, 2, 3 oder 11,
dadurch gekennzeichnet,
daß die schmale Kordschicht (19,19A,19B,19C,19D) eine axiale Breite hat, die größer als die axiale Breite der wenigstens einen der Mehrzahl von Rippen (R1,R2,R3) gemessen an der Laufflächenoberfläche ist, so daß sich eine ihrer Kanten nicht bis unterhalb von einer der ersten und zweiten Seitenwandungen erstreckt, welche die wenigstens eine Rippe definieren, aber die andere Kante von ihr sich bis unterhalb der anderen der ersten und zweiten Seitenwandungen erstreckt.

14. Ein Luftreifen nach einem der Ansprüche 1, 3 oder 11,
dadurch gekennzeichnet,
daß die schmale Kordschicht (19C,19D) eine schmale Lage (a) aus Korden umfaßt, die eine axiale Breite hat, die schmaler als die axiale Breite der wenigstens einen der Mehrzahl von Rippen (R1,R2,R3) gemessen an der Laufflächenoberfläche ist, so daß ihre Kanten sich nicht bis unterhalb der ersten und zweiten Seitenwandungen erstrecken, welche die wenigstens eine Rippe definieren, und weiterhin eine breite Lage (9b) aus Korden umfaßt, die eine Breite hat, die größer als die der schmalen Lage (9a) aber schmaler als die der Gürtelverstärkungsschicht (7) ist und radial zwischen die schmale Lage (9a) und die Gürtelverstärkungsschicht (7) gelegt ist, daß die breite Lage (9b) asymmetrisch in der Axialrichtung des Reifens bezüglich des Reifenäquators angeordnet ist und daß die Breite Lage (9b) eine axiale Breite hat, die größer als die axiale Breite der wenigstens einen der Mehrzahl von Rippen (R1,R2,R3) gemessen an der Laufflächenoberfläche ist, so daß wenigstens eine ihrer Kanten sich bis unterhalb der einen der ersten und zweiten Seitenwandungen erstreckt, welche die wenigstens eine Rippe definieren.

15. Ein Luftreifen nach Anspruch 3 oder 11,
dadurch gekennzeichnet,
daß die schmale Kordschicht (19,19A,19B,19C,19D) eine axiale Breite hat, die kleiner als die axiale Breite der wenigstens einen der Mehrzahl von Rippen (R1,R2,R3) gemessen an der Laufflächenoberfläche ist, so daß ihre Kanten sich nicht bis unterhalb der ersten und zweiten Seitenwandungen erstrecken, welche die wenigstens eine Rippe definieren.

## Revendications

1. Pneumatique (1) comportant une partie (2) de bande de roulement, cette partie (2) de bande de roulement ayant une paire de bords de bande de roulement, une paire de parties (4) de talon qui sont axialement espacées, une paire de parties de flanc (3), une partie de la paire de parties de flanc (3) étant placée entre l'un des bords de bande de roulement et l'une des parties de talon (4), une paire de tringles (5), chacune des deux tringles (5) étant placée dans une partie de talon (4), une carcasse (6) placée entre les parties de talon (4) et repliée autour de l'une des tringles (5), une couche (7) d'armature de ceinture placée radialement à l'extérieur de la carcasse (6) dans la partie (2) de bande de roulement et comprenant au moins une nappe de câblés parallèles, la nappe étant disposée entre les bords de la bande de roulement afin qu'elle renforce la partie (2) de bande de roulement sur toute sa largeur pratiquement, et une étroite couche de câblés (19, 19A, 19B, 19C, 19D) formée de câblés placés radialement à l'extérieur de la couche d'armature de ceinture (7) et ayant une largeur inférieure à celle de la couche d'armature de ceinture (7), la partie (2) de bande de roulement ayant plusieurs gorges circonférentielles (G1, G2, G3) disposées suivant la circonférence du pneumatique parallèlement à l'équateur de celui-ci, chacune des gorges circonférentielles (G1, G2, G3) ayant un flanc axialement interne (G1a, G2a, G3a) et un flanc axialement externe (G1b, G2b, G3b), et divisant la partie (2) de bande de roulement en plusieurs nervures (R1, R2, R3), caractérisé en ce que la couche étroite de câblés (19, 19A, 19B, 19C, 19D) est disposée sous l'une au moins des nervures (R1, R2, R3), la couche étroite de câblés (19, 19A, 19B, 19C, 19D) est disposée asymétriquement, dans la direction axiale du pneumatique, par rapport à l'équateur du pneumatique, ladite nervure au moins parmi les nervures (R1, R2, R3) comporte plusieurs gorges latérales (g1, g2, g3) disposées transversalement sur toute la largeur de cette nervure au moins afin que celle-ci soit divisée en plusieurs blocs, les gorges latérales (g1, g2, g3) étant pratiquement rectilignes, et les câblés de la couche étroite de câblés (19, 19A, 19B, 19C, 19D) sont disposés suivant un angle supérieur à 45° par rapport à la direction des gorges latérales (g1, g2, g3).

2. Pneumatique selon la revendication 1, caractérisé en ce que les gorges latérales (g1, g2, g3) sont parallèles les unes aux autres dans ladite nervure au moins.

3. Pneumatique selon la revendication 1, caractérisé en ce que les câblés de la couche étroite de câblés (19, 19A, 19B, 19C, 19D) sont disposés pratiquement en direction perpendiculaire à la direction des gorges latérales (g1, g2, g3).

4. Pneumatique selon la revendication 1, caractérisé en ce que la couche étroite de câblés (19, 19A, 19B, 19C, 19D) est disposée sous chacune de deux des nervures (R1, R2, R3) qui sont placées asymétriquement par rapport à l'équateur du pneumatique si bien que les couches de câblés ont des positions axiales asymétriques par rapport à l'équateur du pneumatique.

5. Pneumatique selon la revendication 1, caractérisé en ce que la couche étroite de câblés (19, 19A, 19B, 19C, 19D) est disposée seulement d'un côté de l'équateur du pneumatique afin qu'elle forme une armature asymétrique, par rapport à l'équateur du pneumatique, pour la partie (2) de bande de roulement.

6. Pneumatique selon la revendication 5, caractérisé en ce que la couche étroite de câblés (19, 19A, 19B, 19C, 19D) est disposée de l'équateur du pneumatique vers l'un des bords de la bande de roulement.

7. Pneumatique selon la revendication 4, caractérisé en ce que les couches étroites de câblés (19, 19A, 19B, 19C, 19D) ont des largeurs différentes.

8. Pneumatique selon la revendication 4, caractérisé en ce que les couches étroites de câblés (19, 19A, 19B, 19C, 19D) ont des inclinaisons différentes des câblés.

9. Pneumatique selon la revendication 1, caractérisé en ce que la couche étroite de câblés (19, 19A, 19B, 19C, 19D) est composée de deux nappes ayant des largeurs différentes.

10. Pneumatique selon la revendication 1, caractérisé en ce que les gorges circonférentielles (G1, G2, G3) et les gorges latérales (g3) forment une sculpture de bande de roulement qui est symétrique par rapport à l'équateur du pneumatique.

11. Pneumatique selon la revendication 1, caractérisé en ce que les gorges circonférentielles (G1, G2, G3) et les gorges latérales (g3) forment une sculpture de bande de roulement qui est asymétrique par rapport à l'équateur du pneumatique.

12. Pneumatique selon l'une des revendications 1 et 2, caractérisé en ce que la couche étroite de câblés (19, 19A, 19B, 19C, 19D) a une largeur axiale inférieure à la largeur axiale de la nervure au moins parmi les nervures (R1, R2, R3), lorsqu'elle est mesurée à la surface de la bande de roulement, si bien que ses bords ne se prolongent pas pour être placés au-dessous du flanc axialement interne (G1a, G2a, G3a) et du flanc axialement externe (G1b, G2b, G3b) délimitant ladite nervure au moins.

13. Pneumatique selon l'une des revendications 1, 2, 3 et 11, caractérisé en ce que la couche étroite de câblés (19, 19A, 19B, 19C, 19D) a une largeur axiale supérieure à la largeur axiale de ladite nervure au moins parmi les nervures (R1, R2, R3), lors d'une mesure à la surface de la bande de roulement, afin que l'un de ses bords ne se prolonge pas au-dessous de l'un des premier et second flancs délimitant ladite nervure au moins, mais que l'autre bord se prolonge pour être placé sous l'autre des premier et second flancs.

14. Pneumatique selon l'une des revendications 1, 3 et 11, caractérisé en ce que la couche étroite de câblés (19C, 19D) comporte une nappe étroite (a) de câblés ayant une largeur axiale inférieure à la largeur axiale de ladite nervure au moins parmi les nervures (R1, R2, R3), lorsqu'elle est mesurée à la surface de la bande de roulement, afin que ses bords ne se prolongent pas pour se trouver sous les premier et second flancs délimitant ladite nervure au moins, et il comporte en outre une bande large (9b) de câblés ayant une largeur supérieure à celle de la bande étroite (9a) mais inférieure à celle de la couche d'armature de ceinture (7), disposée radialement entre la nappe étroite (9a) et la couche d'armature de ceinture (7), la nappe large (9b) étant disposée asymétriquement, dans la direction axiale du pneumatique, par rapport à l'équateur du pneumatique et la nappe large (9b) a une largeur axiale supérieure à la largeur axiale de ladite nervure au moins parmi les nervures (R1, R2, R3), lorsqu'elle est mesurée à la surface de la bande de roulement, si bien que l'un au moins de ses bords se prolonge afin qu'il se trouve sous l'un des premier et second flancs délimitant ladite nervure au moins.

15. Pneumatique selon la revendication 3 ou 11, caractérisé en ce que la couche étroite de câblés (19, 19A, 19B, 19C, 19D) a une largeur axiale inférieure à la largeur axiale de ladite nervure au moins parmi les nervures (R1, R2, R3), lorsqu'elle est mesurée à la surface de la bande de roulement, si bien que ses bords ne se prolongent pas pour se trouver au-dessous des premier et second flancs délimitant ladite nervure au moins.
